# EUROPEAN PATENT SPECIFICATION

(11) **EP 1 469 141 B1**
(45) Date of publication and mention of the grant of the patent: **19.04.2006**
(21) Application number: 04101496.0
(22) Date of filing: 13.04.2004
(51) Int. Cl.: E04F 15/08, E04F 15/02, E04F 13/14, F21V 33/00, F21S 8/02, G02B 6/00, E04F 13/08

(54) **Tile provided with a lighting element**
Fliese mit Beleuchtungelement
Carreau avec un élément d'éclairage

(30) Priority: 17.04.2003 NL 1023207
(43) Date of publication of application: 20.10.2004
(73) Proprietor: KONINKLIJKE MOSA B.V., 6224 AL Maastricht (NL)
(72) Inventor: Thomaes, Arthur Bernard, 6213 JR Maastricht (NL)
(74) Representative: Van den Heuvel, Henricus Theodorus

(56) References cited:
- WO-A-01/71122
- DE-U- 20 004 992
- DE-U- 20 314 228
- US-A- 5 095 412
- PATENT ABSTRACTS OF JAPAN vol. 015, no. 370 (M-1159), 18 September 1991 (1991-09-18) -& JP 03 147970 A (NIPPON STEEL WELD PROD & ENG CO LTD), 24 June 1991 (1991-06-24)

## Description

The invention relates to a tile to be embedded in larger patterns with other tiles provided with at least one lighting element.

Tiles are applied on a large scale in the construction industry, in particular for finishing floors and walls. A tile is a plane, generally flat slab which may for instance be fired from clay or may be made from glass, concrete or from natural stone. In order to improve the properties of use and/or for aesthetic reasons tiles are frequently provided with a glazed front side. Anchoring of a tile usually takes place in conventional manner by placing the tile, normally in a larger pattern with other tiles, in a bed of mortar, cement, glue or the like.

Floor or wall covering tiles e.g. out of ceramic material are known from WO 01/71122 disclosing inlays illuminated by optical waveguides. The inlay consists of a transparent material or a diffuse reflecting fibre optic element. The inlay is linked with a light source disposed at a distance via an optical waveguide. These tiles make it possible to realize various lighting effects but require specialised handling of the tiles during placing. Also at a location where the tiles according WO 01/71122 are used special attention has to be paid to housing and maintaining a light source disposed at a distance of the tiles.

The object of the present invention is to provide a tile with which a greater variety can be realized in the effects to be achieved with tiles, while maintaining the traditional methods of working and embedding with tiles and without the disadvantages according the prior art.

The invention provides for this purpose a tile according claim 1. The lighting element and the energy supply means protrude less than 3.0 mm, preferably less than 2.0mm, more preferably less than 1.5 mm, and even more preferably less than 1 mm relative to the rear of the tile. Owing to the integration of at least a part of the lighting element into the tile and the limited projection (limited protrusion) of the lighting element and the energy supply means at the rear (the side of the tile to be embedded), the tile can simply be embedded in conventional manner in the mortar, cement or glue since such layers normally have a thickness of at least 3.0 mm, or in some conditions less than 2.0 mm, or in other cases at least 1.5 mm or at least 1 mm. The tile according to the invention makes it possible without complex (structural) measures to provide a conventional tile wall or tile floor with an extra functionality. In addition, the tile according to the invention provides numerous aesthetic options which, because it is unnecessary to take special measures, can be realized with only limited extra investment.

US 5,095,412 relates to temporary ("portable") floors that are to be assembled from wooden panels, wherein the wooden panels contain lighting elements. However, such wooden panels do not compare to tiles, and are unsuitable for permanent structures.

DE 200 04 992 describes a lighting element placed in a recess of a rubber under layer over which a glass tile supported by the rubber under layer is placed. Such a construction is not compatible with tiles in for instance a bed of mortar, as the thickness of the construction does not match.

JP 03 147970 describes a plastic terrazzo panel wherein transparent glass stones are buried that are lighted through optical fibers by an external light source. The fibers leading to the light source have to be arranged under the panel.

DE 20314 228U discloses a tile including a LED in a recess on the rear side of the tile, whereby energy supply means are encapsulated within the recess providing a moisture resistant construction.

An exceptionally attractive embodiment variant is obtained when the recess is open only on the rear of the tile, and the tile part located between the front side of the tile and the recess is light-transmitting. A light effect is thus still visible without there being any unevenness on the side of use of the tile. With a view to maintenance (cleaning) of such a tile, this is particularly advantageous.

Alternatively, it is also possible for the recess to pass through the tile such that it is also opened on the front side of the tile. Other exceptional effects can hereby be obtained, such as for instance a high visibility of the light source and/or having the lighting element protrude (to a limited extent) above the surface of use. This embodiment variant with a continuous recess can be combined with a light-transmitting cover element placed in the recess on the front side of the lighting element. Such a cover element can be given a transparent or semi-transparent form, depending on the intended effect. It is also possible for instance to provide a cover element in the form of a diffuse layer with a pattern, for instance by means of a printed layer. Particularly when the tile is applied in conditions where the tile is loaded with moisture or dirt, it is desirable for the recess to be closed medium-tightly to prevent passage or accumulation of dirt and moisture.

The lighting element is an electrical lighting source and the energy supply means are adapted to transport electrical energy. Such a lighting element with favourable properties for use in the tile according to the invention is a light-emitting diode (LED), the energy supply means of which are adapted to transport low-voltage current. A LED has as advantageous properties for use in the tile that it has a very long lifespan and produces relatively little heat. Furthermore, a LED can be powered with low-voltage current which can be supplied by means of very thin feed lines (up to a diameter of less than 1 mm). In this manner it is possible to comply with strict regulations in respect of built-in electrical fittings, particularly in moist spaces. It is also noted that a LED and possible connections for the wiring can be incorporated in a compactly embodied fitting. Such LED's can also be embedded in an intermediate layer manufactured for instance from a resin, which intermediate layer is then covered on one or two sides by a cover plate.

In yet another embodiment variant, the tile is provided with a light-conducting material layer, to which light-conducting material layer the at least one lighting element connects such that light from the lighting element is cast at least partly into the light-conducting material layer. The light-conducting material layer, for instance a (semi-)transparent (optionally laminated) glass layer or plastic layer, can be used to diffuse light from a light source over a greater area. Such a light-conducting material layer can for instance be formed by a covering layer on the front of the tile. The material layer can herein also be provided with a layer which conceals a lighting element from view when the lighting element is not giving any light, while the layer will however allow through the light emitted by an active light source. This layer can be applied in a manner as desired, for instance in the form of a coating. It is noted that it is also possible to apply a light-emitting foil in combination with the lighting elements (LEDs). Such a foil is herein preferably covered at least on the side of the tile directed toward the user by a (semi-) transparent covering layer.

A further possibility is to provide the rear of the tile with a backplate with which the at least one recess on the rear of the tile is covered. The energy supply means can herein then pass to the outside between the tile and the backplate. The recess is thus protected at the rear from dirt and moisture.

In a preferred variant the energy supply means are provided with a fixed connection to the lighting element and are supplied with an excess length, for instance wire or cable lengths of at least several metres, preferably with at least 6 metres or more-preferably at least 15 metres of length. The advantage of this embodiment variant is that the fitting of the connection of the supply means to the lighting element can be manufactured during production of the tile and can thus be guaranteed to a minimal quality level. This minimal quality level of the connection cannot be guaranteed when the connection is made on site (i.e. by the tiler). In this embodiment variant no connection has to be realized at the position of the tile between the supply means and the lighting element during placing of the tiles according to the invention. It is precisely this connection which is very critical as it is embedded in the fixing material (for instance the mortar, cement and/or glue), and after fixing of the tile can no longer be maintained without causing considerable problems. After fixing of the tile the excess length of the supply means on the side of the supply means remote from the tile can be shortened to the length desired in the specific conditions. This shortening and connecting of the supply means will preferably be carried out by a specialist in the field of connections (i.e. not by a tiler but by an electrician). The cable can also be provided on the side remote from the tile with a connecting element, such as for instance a plug or connector which can be connected to a power supply. Possible excess cable length can be wound up or otherwise concealed.

The invention will be further elucidated on the basis of the non-limitative exemplary embodiments shown in the following figures, in which:
figure 1A shows a front view of a tile according to the present invention,
figure 1B shows a cross-section through the tile shown in figure 1A,
figure 2 shows a cross-section through a part of an alternative embodiment variant of a tile according to the invention,
figure 3 shows a cross-section through a part of a second alternative embodiment variant of a tile according to the invention,
figure 4 shows a cross-section through a part of a third alternative embodiment variant of a tile according to the invention, and
figure 5 shows a front view of a fourth alternative embodiment variant of a tile according to the invention.

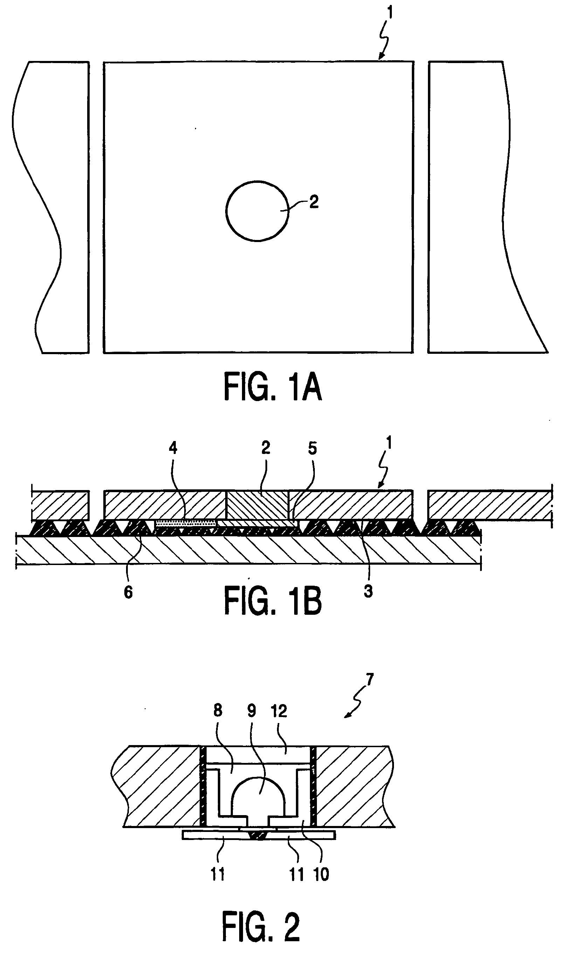

Figure 1A shows a tile 1 in which a lighting element 2 is arranged at a random position. Tile 1 can be placed in conventional manner in accordance with the prior art. Figure 2 shows a cross-section through tile 1, wherein can be seen that lighting element 2 protrudes to a limited extent on the underside relative to the bottom 3 of tile 1. Connecting onto lighting element 2 are power supply cables 4 which are given a thin form such that, just as the part 5 of lighting element 2 protruding on the underside of tile 1, they can be embedded in a glue or cement layer 6 of normal thickness.

Figure 2 shows a part of an alternative embodiment variant of a tile 7 with a light-emitting diode (LED) 9 placed in a recess 8. LED 9 is placed in a fitting 10 located wholly in recess 8. Flat electrical connections 11 are located on the underside of fitting 10. In order to protect LED 9 and to prevent contaminants and/or moisture entering the opening, recess 8 is covered on the top side of tile 7 by a transparent cover element 12.

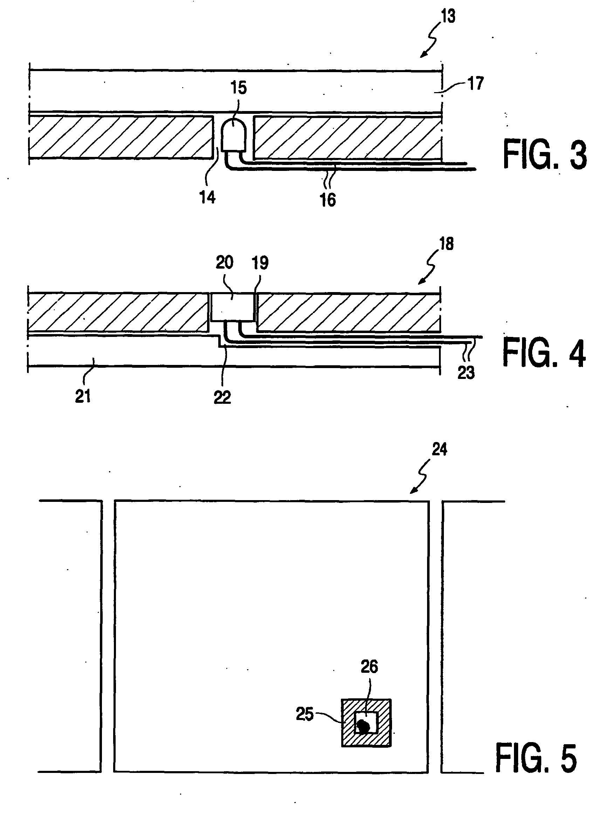

Figure 3 shows a tile 13 with a recess 14 in which a LED 15 is placed. LED 15 is connected to electrical (low-voltage) wiring lying on the underside of tile 13. The top side of tile 13 is provided with a (semi-)transparent cover plate 17. In addition to having a protective function, the transparent cover plate 17 can also have a function in diffusing the light cast by LED 15 over a greater area than that bounded by opening 14.

Tile 18 of figure 4 is provided with an opening 19 with a LED 20 received close-fittingly therein. The rear side of tile 18 is provided with a shield plate 21. A track 22 is left clear in shield plate 21 for the passage of electric wiring 23.

Figure 5 shows a top view of a tile 24 with a light source 25 received therein, which light source 25 encloses a central, transparent or semi-transparent part 26. Light source 25 can be covered by a light-impermeable part (not shown), for instance in the form of a covering with sheet material or printing. The light will then illuminate the transparent or semi-transparent part 26 indirectly. In yet another tile (not shown), a light source integrated into a tile can be covered with a transparent or semi-transparent material part which protrudes above the top side of the tile. In a further tile the side of the transparent or semi-transparent part protruding above the tile which is parallel to the top side of the tile is covered in light-impermeable manner; only the protruding edge part will then be able to diffuse light.

## Claims

1. Tile (1, 7, 13, 18, 24) fired from clay or made from glass, concrete or natural stone, to be embedded in larger patterns with other tiles (1, 7, 13, 18, 24) in a bed of mortar, cement, glue or the like, **characterised in that** the tile is provided with at least one recess (8, 14) arranged in the rear side (3) of the tile (1, 7, 13, 18, 24), the tile comprising at least one lighting element (2, 9, 15, 20, 25) and energy supply means (4, 16, 23) connecting onto the lighting element (2, 9, 15, 20, 25), that the lighting element (2, 9, 15, 20, 25) is placed in the recess (8, 14) such that the lighting element (2, 9, 15, 20, 25) and the energy supply means (4, 23) protrude less than 3.0 mm relative to the rear side (3) of the tile (1, 7, 13, 18, 24), wherein the lighting element (2, 9, 15, 20, 25) is an electrical lighting source (2, 9, 15, 20, 25) and the energy supply means (4, 16, 23) are electrical wiring adapted to transport electrical energy, the electrical wiring lying on the rear side of the tile.

2. Tile (1, 7, 13, 18, 24) fired from clay or made from glass, concrete or natural stone, to be embedded in larger patterns with other tiles (1, 7, 13, 18, 24) in a bed of mortar, cement, glue or the like, **characterised in that** the tile is provided with at least one recess (8, 14) arranged in the rear side (3) of the tile (1, 7, 13, 18, 24), the tile comprising at least one lighting element (2, 9, 15, 20, 25) and energy supply means (4, 16, 23) connecting onto the lighting element (2, 9, 15, 20, 25), that the lighting element (2, 9, 15, 20, 25) is placed in the recess (8, 14) such that the lighting element (2, 9, 15, 20, 25) and the energy supply means (4, 23) protrude less than 2.0 mm relative to the rear side (3) of the tile (1, 7, 13, 18, 24), wherein the lighting element (2, 9, 15, 20, 25) is an electrical lighting source (2, 9, 15, 20, 25) and the energy supply means (4, 16, 23) are electrical wiring adapted to transport electrical energy, the electrical wiring lying on the rear side of the tile.

3. Tile (1,7, 13, 18, 24) as claimed in claim 1 or 2, **characterized in that** the lighting element (2, 9, 15, 20, 25) and the energy supply means (4, 16, 23) protrude less than 1.5 mm, preferably less than 1 mm relative to the rear (3) of the tile (1, 7, 13, 18,24).

4. Tile (1, 7, 13, 18, 24) as claimed in claim 1 - 3, **characterized in that** the recess (8, 14) is open only on the rear (3) of the tile (1, 7, 13, 18, 24) and that the tile part located between the front side of the tile (1, 7, 13, 18, 24) and the recess (8, 14) is light-transmitting.

5. Tile (1, 7, 13, 18, 24) as claimed in claim 1 - 3, **characterized in that** the recess (8, 14) passes through the tile (1, 7, 13, 18, 24) such that it is also opened on the front side of the tile (1, 7, 13, 18, 24).

6. Tile (1, 7, 13, 18, 24) as claimed in claim 5, **characterized in that** a light transmitting cover element (12) is placed in the recess (8, 14) on the front side of the lighting element (2, 9, 15, 20, 25).

7. Tile (1, 7, 13, 18, 24) as claimed in claim 5 or 6, **characterized in that** the recess (8, 14) is closed medium-tightly.

8. Tile (1, 7, 13, 18, 24) as claimed in any of the foregoing claims, **characterized in that** the lighting element (2, 9, 15, 20, 25) is a light-emitting diode (LED) (9, 15, 20) and the energy supply means (4, 16, 23) are adapted to transport low-voltage current.

9. Tile (1, 7, 13, 18, 24) as claimed in any of the foregoing claims, **characterized in that** the tile (1, 7, 13, 18, 24) is provided with a light-conducting material layer (17), to which light-conducting material layer (17) the at least one lighting element (2, 9, 15,
20, 25) connects such that light from the lighting element (2, 9, 15, 20, 25) is cast at least partly into the light-conducting material layer (17).

10. Tile (1, 7, 13, 18, 24) as claimed in claim 9, **characterized in that** the light-conducting material layer (17) is a covering layer (17) on the front side of the tile (1, 7,
13, 18, 24).

11. Tile (1, 7, 13, 18, 24) as claimed in any of the foregoing claims, **characterized in that** the rear (3) of the tile (1, 7, 13, 18, 24) is provided with a backplate (21) with which the at least one recess on the rear (3) of the tile (1, 7, 13, 18, 24) is covered.

12. Tile (1,7, 13, 18, 24) as claimed in claim 11, **characterized in that** the energy supply means (4, 16, 23) pass to the outside between the tile (1, 7, 13, 18, 24) and the backplate (21).

13. Tile (1, 7, 13, 18, 24) as claimed in any of the foregoing claims, **characterized in that** the energy supply means (4, 16, 23) are connected via a fixed connection (11) to
the lighting element (2, 9, 15, 20, 25) and have a length of at least several metres, preferably at least 6 metres or more preferably at least 15 metres.

## Patentansprüche

1. Aus Lehm gebrannte oder aus Glas, Beton oder Naturstein hergestellte Fliese (1, 7, 13, 18, 24) zum Einbetten in größeren Mustern zusammen mit anderen Fliesen (1, 7, 13, 18, 24) in eine Unterlage aus Mörtel, Zement, Klebstoff oder dergleichen, **dadurch gekennzeichnet, dass** die Fliese mit mindestens einer an der Rückseite (3) der Fliese (1, 7, 13,18,24) angebrachten Aussparung (8, 14) versehen ist, die Fliese umfasst mindestens ein Beleuchtungselement (2, 9, 15, 20, 25) und Energieeinspeisungsmittel (4, 16,23), die an das Beleuchtungselement (2, 9, 15, 20, 25) angeschlossen sind, dass das Beleuchtungselement (2, 9, 15, 20, 25) so in der Aussparung (8, 14) angebracht ist, dass das Beleuchtungselement (2, 9, 15, 20, 25) und die Energieeinspeisungsmittel (4, 23), bezogen auf die Rückseite (3) der Fliese (1, 7, 13, 18, 24), weniger als 3,0 mm vorstehen, worin das Beleuchtungselement (2, 9, 15, 20, 25) eine elektrische Lichtquelle (2, 9, 15, 20, 25) ist und die Energieeinspeisungsmittel (4, 16, 23) elektrische Leitungen sind, die zum Transport von elektrischer Energie angepasst sind, wobei die elektrischen Leitungen an der Rückseite der Fliese liegen.

2. Aus Lehm gebrannte oder aus Glas, Beton oder Naturstein hergestellte Fliese (1, 7, 13, 18, 24) zum Einbetten in größeren Mustern zusammen mit anderen Fliesen (1, 7, 13, 18, 24) in eine Unterlage aus Mörtel, Zement, Klebstoff oder dergleichen, **dadurch gekennzeichnet, dass** die Fliese mit mindestens einer an der Rückseite (3) der Fliese (1, 7, 13, 18, 24) angebrachten Aussparung (8, 14) versehen ist, die Fliese umfasst mindestens ein Beleuchtungselement (2, 9, 15, 20, 25) und Energieeinspeisungsmittel (4, 16, 23), die an das Beleuchtungselement (2, 9, 15, 20, 25) angeschlossen sind, dass das Beleuchtungselement (2, 9, 15, 20, 25) so in der Aussparung (8, 14) angebracht ist, dass das Beleuchtungselement (2, 9, 15, 20, 25) und die Energieeinspeisungsmittel (4, 23), bezogen auf die Rückseite (3) der Fliese (1, 7, 13, 18, 24), weniger als 2,0 mm vorstehen, worin das Beleuchtungselement (2, 9, 15, 20, 25) eine elektrische Lichtquelle (2, 9, 15, 20, 25) ist und die Energieeinspeisungsmittel (4, 16, 23) elektrische Leitungen sind, die zum Transport von elektrischer Energie angepasst sind, wobei die elektrischen Leitungen an der Rückseite der Fliese liegen.

3. Fliese (1, 7, 13, 18, 24) nach Anspruch 1 oder 2, **dadurch gekennzeichnet, dass** das Beleuchtungselement (2, 9, 15, 20, 25) und die Energieeinspeisungsmittel (4, 16, 23) bezogen auf die Rückseite (3) der Fliese (1, 7, 13, 18, 24) weniger als 1,5 mm, vorzugsweise weniger als 1 mm vorstehen.

4. Fliese (1, 7, 13, 18, 24) nach Anspruch 1 - 3, **dadurch gekennzeichnet, dass** die Aussparung (8, 14) nur an der Rückseite (3) der Fliese (1, 7, 13, 18, 24) offen ist und dass der zwischen der Vorderseite der Fliese (1, 7, 13, 18, 24) und der Aussparung (8, 14) gelegene Fliesenteil lichtdurchlässig ist.

5. Fliese (1, 7, 13, 18, 24) nach Anspruch 1 - 3, **dadurch gekennzeichnet; dass** die Aussparung (8, 14) durch die Fliese (1, 7, 13, 18, 24) hindurchgeht, sodass sie auch an der Vorderseite der Fliese (1, 7, 13, 18, 24) offen ist.

6. Fliese (1, 7, 13, 18, 24) nach Anspruch 5, **dadurch gekennzeichnet, dass** ein lichtdurchlässiges Abdeckelement (12) in der Aussparung (8, 14) an der Vorderseite des Beleuchtungselements (2, 9, 15, 20, 25) angebracht ist.

7. Fliese (1, 7, 13, 18, 24) nach Anspruch 5 oder 6, **dadurch gekennzeichnet, dass** die Aussparung (8, 14) halbfest verschlossen ist.

8. Fliese (1, 7, 13, 18, 24) nach einem der vorhergehenden Ansprüche, **dadurch gekennzeichnet, dass** das Beleuchtungselement (2, 9, 15, 20, 25) eine Licht emittierende Diode (LED) (9, 15, 20) ist und die Energieeinspeisungsmittel (4, 16, 23) für den Transport von Niedervoltstrom angepasst sind.

9. Fliese (1, 7, 13, 18, 24) nach einem der vorhergehenden Ansprüche, **dadurch gekennzeichnet, dass** die Fliese (1, 7, 13, 18, 24) mit einer lichtdurchlässigen Materialschicht (17) versehen ist, mit welcher lichtdurchlässigen Materialschicht (17) das mindestens eine Beleuchtungselement (2, 9, 15, 20, 25) verbunden ist, sodass das Licht von dem Beleuchtungselement (2, 9, 15, 20, 25) zumindest teilweise in die lichtdurchlässige Materialschicht (17) geworfen wird.

10. Fliese (1, 7, 13, 18, 24) nach Anspruch 9, **dadurch gekennzeichnet, dass** die lichtdurchlässige Materialschicht (17) eine Abdeckschicht (17) an der Vorderseite der Fliese (1, 7, 13, 18, 24) ist.

11. Fliese (1, 7, 13, 18, 24) nach einem der vorhergehenden Ansprüche, **dadurch gekennzeichnet, dass** die Rückseite (3) der Fliese (1, 7, 13,18, 24) mit einer Abschlussplatte (21) versehen ist, mit der die mindestens eine Aussparung an der Rückseite (3) der Fliese (1, 7, 13, 18, 24) bedeckt ist.

12. Fliese (1, 7, 13, 18, 24) nach Anspruch 11, **dadurch gekennzeichnet, dass** die Energieeinspeisungsmittel (4, 16, 23) zur Außenseite zwischen der Fliese (1, 7, 13, 18, 24) und der Abschlussplatte (21) hindurchgehen.

13. Fliese (1, 7, 13, 18, 24) nach einem der vorhergehenden Ansprüche, **dadurch gekennzeichnet, dass** die Energieeinspeisungsmittel (4, 16, 23) über eine feste Verbindung (11) mit dem Beleuchtungselement (2, 9, 15, 20, 25) verbunden sind und eine Länge von mindestens mehreren Metern, vorzugsweise von mindestens 6 Metern oder noch besser von mindestens 15 Metern haben.

## Revendications

1. Carreau (1, 7, 13, 18, 24) cuit à partir d'argile ou fait en verre, béton ou pierre naturelle, à poser selon des figures de grande taille avec d'autres carreaux (1, 7, 13, 18, 24) sur un lit de mortier, de ciment, de colle ou d'une substance analogue, **caractérisé en ce que** le carreau est pourvu d'au moins une cavité (8, 14) agencée dans la face arrière (3) du carreau (1, 7, 13, 18, 24), le carreau comprenant au moins un élément d'éclairage (2, 9, 15, 20, 25) et des moyens d'alimentation en énergie (4, 16, 23) se raccordant à l'élément d'éclairage (2, 9, 15, 20, 25), **en ce que** l'élément d'éclairage (2, 9, 15, 20, 25) est placé dans la cavité (8, 14) de telle sorte que l'élément d'éclairage (2, 9, 15, 20, 25) et les moyens d'alimentation en énergie (4, 23) débordent de moins de 3,0 mm relativement à la face arrière (3) du carreau (1, 7, 13, 18, 24), l'élément d'éclairage (2, 9, 15, 20, 25) étant une source lumineuse électrique (2, 9, 15, 20, 25) et les moyens d'alimentation en énergie (4, 16, 23) étant un câblage électrique adapté pour transporter de l'énergie électrique, le câblage électrique reposant sur la face arrière du carreau.

2. Carreau (1, 7, 13, 18, 24) cuit à partir d'argile ou fait en verre, béton ou pierre naturelle, à poser selon des figures de grande taille avec d'autres carreaux (1, 7, 13, 18, 24) sur un lit de mortier, de ciment, de colle ou d'une substance analogue, **caractérisé en ce que** le carreau est pourvu d'au moins une cavité (8, 14) agencée dans la face arrière (3) du carreau (1, 7, 13, 18, 24), le carreau comprenant au moins un élément d'éclairage (2, 9, 15, 20, 25) et des moyens d'alimentation en énergie (4, 16, 23) se raccordant à l'élément d'éclairage (2, 9, 15, 20, 25), **en ce que** l'élément d'éclairage (2, 9, 15, 20, 25) est placé dans la cavité (8, 14) de telle sorte que l'élément d'éclairage (2, 9, 15, 20, 25) et les moyens d'alimentation en énergie (4, 23) débordent de moins de 2,0 mm relativement à la face arrière (3) du carreau (1, 7, 13, 18, 24), l'élément d'éclairage (2, 9, 15, 20, 25) étant une source lumineuse électrique (2, 9, 15, 20, 25) et les moyens d'alimentation en énergie (4, 16, 23) étant un câblage électrique adapté pour transporter de l'énergie électrique, le câblage électrique reposant sur la face arrière du carreau.

3. Carreau (1, 7, 13, 18, 24) selon la revendication 1 ou 2, **caractérisé en ce que** l'élément d'éclairage (2, 9, 15, 20, 25) et les moyens d'alimentation en énergie (4, 16, 23) débordent.de moins de 1,5 mm, de préférence de moins de 1 mm relativement à l'arrière (3) du carreau (1, 7,13,18,24).

4. Carreau (1, 7, 13, 18, 24) selon la revendication 1-3, **caractérisé en ce que** la cavité (8, 14) s'ouvre seulement sur l'arrière (3) du carreau (1, 7, 13, 18, 24) et **en ce que** la partie de carreau située entre la face avant du carreau (1, 7, 13, 18, 24) et la cavité (8, 14) est translucide.

5. Carreau (1, 7, 13, 18, 24) selon la revendication 1-3, **caractérisé en ce que** la cavité (8, 14) passe à travers le carreau (1, 7, 13, 18, 24) de telle sorte qu'elle s'ouvre aussi sur la face avant du carreau (1, 7, 13, 18, 24).

6. Carreau (1, 7, 13, 18, 24) selon la revendication 5, **caractérisé en ce qu'**un élément de recouvrement translucide (12) est placé dans la cavité (8, 14) sur la face avant de l'élément d'éclairage (2, 9, 15, 20, 25).

7. Carreau (1, 7, 13, 18, 24) selon la revendication 5 ou 6, **caractérisé en ce que** la cavité (8, 14) est fermée semi-hermétiquement.

8. Carreau (1, 7, 13, 18, 24) selon l'une quelconque des revendications précédentes, **caractérisé en ce que** l'élément d'éclairage (2, 9, 15, 20, 25) est une diode électroluminescente (DEL) (9, 15, 20) et **en ce que** les moyens d'alimentation en énergie (4, 16, 23) sont adaptés pour transporter du courant à basse tension.

9. Carreau (1, 7, 13, 18, 24) selon l'une quelconque des revendications précédentes, **caractérisé en ce que** le carreau (1, 7, 13, 18, 24) est pourvu d'une couche de matériau conduisant la lumière (17), laquelle couche de matériau conduisant la lumière (17) est raccordée au au moins un élément d'éclairage (2, 9, 15, 20, 25) de telle sorte que la lumière provenant de l'élément d'éclairage (2, 9, 15, 20, 25) soit projetée au moins partiellement dans la couche de matériau conduisant la lumière (17).

10. Carreau (1, 7, 13, 18, 24) selon la revendication 9, **caractérisé en ce que** la couche de matériau conduisant la lumière (17) est une couche de recouvrement (17) sur la face avant du carreau (1, 7, 13, 18, 24).

11. Carreau (1, 7, 13, 18, 24) selon l'une quelconque des revendications précédentes, **caractérisé en ce que** l'arrière (3) du carreau (1, 7, 13, 18, 24) est pourvu d'une plaque arrière (21) avec laquelle la au moins une cavité à l'arrière (3) du carreau (1, 7, 13, 18, 24) est recouverte.

12. Carreau (1, 7, 13, 18, 24) selon la revendication 9, **caractérisé en ce que** les moyens d'alimentation en énergie (4, 16, 23) passent à l'extérieur entre le carreau (1, 7, 13, 18, 24) et la plaque arrière (21).

13. Carreau (1, 7, 13, 18, 24) selon l'une quelconque des revendications précédentes, **caractérisé en ce que** les moyens d'alimentation en énergie (4, 16, 23) sont raccordés par un raccordement fixe (11) à l'élément d'éclairage (2, 9, 15, 20, 25) et ont une longueur d'au moins plusieurs mètres, de préférence au moins 6 mètres ou de manière plus préférable, au moins 15 mètres.
